# EUROPÄISCHE PATENTSCHRIFT

(11) **EP 2 284 505 B1**
(45) Veröffentlichungstag und Bekanntmachung des Hinweises auf die Patenterteilung: **14.05.2014**
(21) Anmeldenummer: 10007681.9
(22) Anmeldetag: 23.07.2010
(51) Int. Cl.: G01G 19/00

(54) **Transportvorrichtung für eine Waage**
Transport device for a weighing machine
Dispositif de transport pour une balance

(30) Priorität: 14.08.2009 DE 202009010875 U
(43) Veröffentlichungstag der Anmeldung: 16.02.2011
(73) Patentinhaber: WIPOTEC Wiege-und Positioniersysteme GmbH, 67657 Kaiserslautern (DE)
(72) Erfinder: Schulzki, Alexander, 67705 Stelzenberg (DE)
(74) Vertreter: Mischung, Ralf

(56) Entgegenhaltungen:
- EP-A1- 1 400 790
- EP-A1- 2 040 049
- EP-A2- 1 715 307
- DE-A1- 19 922 881
- DE-B3- 10 319 723
- DE-B3-102004 059 865

## Beschreibung

Die vorliegende Erfindung betrifft eine Transportvorrichtung für eine Waage nach dem Oberbegriff des Anspruchs 1.

Derartige Transportvorrichtungen sind für dynamische Waagen aus dem Stand der Technik bekannt. Dabei werden zu wiegende Güter aufeinanderfolgend einem Wägeband zugeführt und während des Transports über dieses Band gewogen. Die Güter, insbesondere Briefe, werden dem Wägeband über einen Einlaufbereich zugeführt und stromabwärts des Wägebands an eine Abfuhreinrichtung übergeben.

Bei der Übergabe des Briefes von der nicht mitgewogenen Zufuhrvorrichtung im Einlaufbereich an das Vorlast bildende Wägeband kommt es oft zu unerwünschtem Kraftnebenschluss und zu dynamischen Effekten, die das Wägesignal stören. Zur besonders genauen bzw. störungsfreien Ermittlung des Briefgewichts ist aus dem Stand der Technik bekannt, den Brief während des Wiegevorgangs auf dem Wägeband seitlich zu klemmen. Dadurch sollen Stöße verringert oder ausgeschlossen werden, so dass eine beruhigte Übertragung des Briefes möglich wird. Ein solche Lösung zeigt bspw. die DE 10 2007 044 746 A1.

Bekannt ist auch die Idee, die Briefe bereits im Einlaufbereich mit derjenigen Geschwindigkeit zu transportieren, mit der die Briefe später auf dem Wägeband weitergefördert werden, um Stoßeffekte bzw. Massenträgheitseffekte weitgehend auszuschließen. Dazu lehrt die DE 10 2005 018 395 A1, die Güter hochkant auf einer Längskante stehend zwischen gegenüberliegenden Förderbändern seitlich zu klemmen und die Klemmung im Bereich oberhalb eines waagerechten Wägebandes aufzuheben, so dass die Güter auf das Wägeband absinken und dort gewogen werden. Gleichzeitig werden sie mit dem Wägeband weitertransportiert und schließlich hinter der Waage von den Förderbändern wieder geklemmt. Dabei wird die Wägezelle jedoch von erheblichen Störkräften beeinflusst. Ferner ist diese Vorrichtung zum Transport von hochkant auf dem Wägeband stehenden Briefen ungeeignet.

Daher können die aus dem Stand der Technik bekannten Lösungen höheren Anforderungen an die Wägegenauigkeit bei gleichzeitig möglichst hoher Transportgeschwindigkeit nicht gerecht werden.

Aus der EP 1 400 790 A1 ist ein Verfahren zum Wiegen von Poststücken bekannt. Auf einem horizontalen Förderband, welches an ein dazu vertikal ausgerichtetes Förderband angrenzt, werden Briefe transportiert und gleichzeitig gewogen. Durch Ablenkmittel werden die Briefe zuvor an das vertikale Förderband anliegend positioniert, wobei beide Förderbänder gemeinsam etwas geneigt sind, um den Brief in seiner Lage zu stabilisieren. Allerdings sind die Ablenkmittel konstruktiv aufwändig.

Aus der EP 1 715 307 A2 ist eine Fördereinrichtung mit Wägevorrichtung bekannt, bei der zwei gegenüberliegende Förderbänder das zu wiegende Gut stromaufwärts und stromabwärts des Wägebandes klemmen. Die Klemmung wird vor der Übergabe auf das Wägeband freigegeben, so dass die zu transportierenden Güter (Verpackungen) freistehend und ohne seitliche Führung gewogen werden können. Insbesondere für den Transport von hochkant stehenden Briefen ist diese Fördereinrichtung jedoch ungeeignet, da der Brief ohne seitliche Führung während des Wiegens instabil steht.

Die DE 199 22 881 A1 offenbart eine Vorrichtung zum Wiegen von bewegtem Postgut, bei dem Briefe auf einem unteren Förderband transportiert und gleichzeitig gewogen werden. Während des Wiegevorgangs liegen die Briefe durch Neigung der gesamten Vorrichtung seitlich an Führungsrippen an, an denen sie entlang gleiten. Für ein exaktes Wiegeergebnis erscheinen diese Führungsrippen ungeeignet. Ferner muss der Brief zum Wiegen in eine definierte stabile Lage gebracht werden.

Aufgabe der Erfindung ist es daher, die aus dem Stand der Technik bekannten Transportvorrichtungen für dynamische Waagen zu verbessern und insbesondere unerwünschte dynamische Kräfte bei der Übergabe der zu wiegenden Güter auf das Wägeband zu reduzieren.

Die Aufgabe wird gelöst durch eine Transportvorrichtung nach Anspruch 1.

Die Erfindung geht von der Erkenntnis aus, dass eine besonders störungsarme Übergabe aus dem Einlaufbereich auf das Wägeband dann möglich wird, wenn die Güter während des Transports auf dem Wägeband durch seitliche Führungselemente zwar gegen Umfallen gesichert und seitlich anliegend geführt werden, der minimale Abstand zwischen diesen Führungselementen jedoch stets größer gehalten wird als die maximale Dicke der Güter, wenn diese zwischen den Führungselementen hindurchgefördert werden. Da der Brief auch während des Wiegens nicht geklemmt wird, treten entsprechend auch dann keine Stoßbelastungen in Förderrichtung oder auch quer dazu auf.

Erfindungsgemäß dienen die zueinander beabstandeten Führungselemente nur zur seitlichen Führung und Stabilisierung des Briefes, der insbesondere hochkant stehend transportiert wird. Die Führungselemente dienen lediglich als Stütze zur seitlichen Anlage des Briefes, ohne ihn aktiv mit weiteren Kräften zu beaufschlagen.

Zum besonders störungsfreien Wiegen des Briefes läuft dieser zweckmäßigerweise über das Wägeband, ohne dabei seine Ausrichtung im Raum zu ändern und auch ohne durch temporär aufgebrachte seitliche Druckkräfte in irgendeiner Weise beaufschlagt zu werden. Da der Brief während des Transports auf dem Wägeband nur mit seiner Unterkante auf dem Wägeband und mit einer Seite an einem Führungselement frei anliegt (und ansonsten durch keine weiteren Kräfte beaufschlagt wird) reduzieren sich vorteilhaft die aus dem Stand der Technik bekannten dynamischen Stoßeffekte. Für ein besonders genaues Wägeergebnis bilden die Führungselemente oberhalb des Wägebands gemeinsam mit diesem eine Vorlast für die Waage, so dass Kraftnebenschlusseffekte während des Transports über das Wägeband ausgeschlossen sind.

Damit umfasst die erfindungsgemäße Transportvorrichtung ein Wägeband, welches Vorlast für eine Wägezelle bildet. Das Wägeband ist zum Transport von hochkant darauf stehenden und zu wiegenden Gütern ausgebildet, wobei dieser Transport in einer ersten Richtung X erfolgen soll. Erfindungsgemäß erhält das Wägeband die Güter von einer in einem vorausgehenden Einlaufbereich angeordneten Zufuhrvorrichtung. Diese umfasst Mittel zum Transport der Güter (ein Zufuhrband oder Zufuhrrollen oder ähnliche, zur Auflage und zum Transport der Güter geeignete Mittel). Die Zufuhrvorrichtung mit ihren Transportmitteln bildet keine Vorlast für die Wägezelle. Das Wägeband übernimmt die Güter von der vorausgehenden Zufuhrvorrichtung, um sie zu wiegen und übergibt sie an eine in einem nachfolgenden Auslaufbereich angeordnete Abfuhrvorrichtung. Die zu wiegenden Güter, bei denen es sich vorzugsweise um Briefe handelt, erstrecken sich beim Wiegevorgang zweckmäßigerweise in einer ersten Richtung X, die der Transportrichtung des Wägebands entspricht, einer quer dazu verlaufenden, horizontalen Richtung Y und einer zu beiden Richtungen X, Y senkrecht verlaufenden vertikalen Richtung Z, die auch der Messrichtung der Wägezelle entspricht.

Erfindungsgemäß sind zwei Vorlast bildende Wiege-Führungselemente vorgesehen, um die Güter während des Transports auf dem Wägeband in der zweiten Richtung Y seitlich zu führen, ohne sie jedoch zu klemmen. Dazu ist der minimale Y-Abstand zwischen den Wiege-Führungselementen größer gewählt als die maximale Ausdehnung der Güter in Y-Richtung. Die maximale Dicke der Briefe liegt also stets unter dem Mindestabstand der Wiege-Führungselemente, so dass unerwünschte Klemmeffekte vermieden werden.

Da Briefe meist ein flaches Format haben, können sie auf dem Wägeband, während sie hochkant transportiert werden, nicht frei stehen, sondern lehnen sich an das eine oder andere der beiden Führungselemente leicht an. Damit nehmen sie jedoch eine stabile Lage während des Transports über das Wägeband ein und können so zuverlässig gewogen werden.

Eine Ausführungsform der Erfindung sieht vor, dass auch die Zufuhrvorrichtung stromaufwärts des Wägebands wenigstens zwei Einlauf-Führungselemente aufweist, um die Güter bereits in diesem Bereich zu stabilisieren bzw. zu führen. Auch hier soll der Y-Abstand zwischen den Einlauf-Führungselementen größer sein als die maximale Y-Abmessung bzw. Dicke der Briefe. Dies soll wenigstens in einem Übergabebereich gelten, an dem die Briefe von der Zufuhrvorrichtung an das Wägeband übergeben werden, wobei die dem Transport dienenden Oberseiten von Wägeband und Transportband der Zufuhrvorrichtung fluchtend zueinander ausgerichtet sind. Durch die in diesem Bereich gleich gewählten Y-Abstände zwischen den Einlauf-Führungselementen bzw. den Wiege-Führungselementen sowie durch deren zueinander fluchtende Anordnung wird der Brief nahezu ohne unerwünschte Stoßeffekte geschmeidig vom Wägeband aufgenommen, ohne seine Ausrichtung im Raum zu ändern oder zusätzliche Kräfte beim Übergang zu erfahren. Durch eine solche weitgehend störungsfreie Übergabe lässt sich das Wägeergebnis gegenüber dem Stand der Technik vorteilhaft verbessern, da die Wägezelle nicht durch Stöße beeinflusst wird und das eingeschwungene Wägeergebnis schneller bereitstellen kann.

Zur Vermeidung von unerwünschtem Kraftnebenschluss sind die Einlauf-Führungselemente getrennt von den Wiege-Führungselementen ausgebildet. Während erstere ortsfest bzw. mit der Zufuhrvorrichtung verbunden sein können, bilden die Wiege-Führungselemente eine Vorlast für die Wägezelle.

Zur besonders schonenden Übergabe der Güter aus dem Einlaufbereich auf das Wägeband sieht eine Ausführungsform der Erfindung vor, dass die Einlauf-Führungselemente und die Wiege-Führungselemente in X-Richtung unmittelbar aneinander grenzen oder sich in X-Richtung teilweise überlappen. Im letzteren Fall wird der Brief übergangs- bzw. absatzlos und kontinuierlich seitlich geführt, wobei die Wiege-Führungselemente spätestens zum Zeitpunkt des Wiegens die seitliche Führung vollständig übernehmen.

Unerwünschte dynamische Störeffekte lassen sich nach einer weiteren Ausführungsform der Erfindung weiter reduzieren, indem das Wägeband und die angetriebenen Wiege-Führungselemente durch einen gemeinsamten Motor, vorzugsweise mittels Zahnriemen, antreibbar sind. Gegenüber einem für die Führungselemente separat vorzusehenden Motor reduzieren sich neben der Vorlast bildenden Masse auch die mechanischen Störfrequenzen und Unwuchten sowie die Kosten.

Zweckmäßigerweise sind die Führungselemente mittels Achsen gelagert, welche sich in Messrichtung der Wägezelle, also in Z-Richtung erstrecken. Eventuell auftretende UnwuchtKräfte wirken dann senkrecht zur Messrichtung und reduzieren den Störeinfluss auf die Wägezelle.

Eine Ausführungsform der Erfindung sieht weiterhin vor, intelligente Motoren mit hochauflösenden Drehwinkel-Messsystemen vorzusehen, um die Bänder bzw. Führungselemente anzutreiben. Dadurch lassen sich Drehzahl, Drehwinkel, und Beschleunigung der Motorwellen bzw. der damit gekoppelten Komponenten hochgenau vorgeben bzw. synchronisieren. Insbesondere können Unwuchten verschiedener angetriebener Komponenten oder Motorwellen in einen geeigneten Phasenwinkel zueinander gestellt werden, so dass sich von ihnen jeweils ausgehende Unwuchtkräfte bestmöglich gegenseitig kompensieren.

Weitere vorteilhafte Ausführungsformen ergeben sich aus den Unteransprüchen.

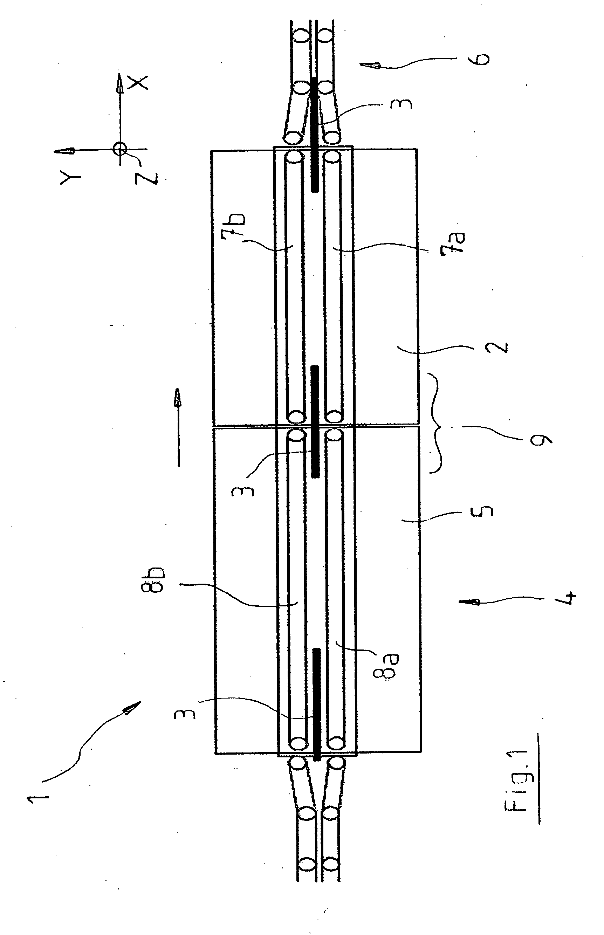

Nachfolgend soll eine Ausführungsform der Erfindung anhand eines Figurenbeispiels beschrieben werden. Die einzige Fig. 1 zeigt dabei in schematischer Draufsicht eine über eine nicht dargestellte Wägezelle verlaufende Transportstrecke. Die Transportvorrichtung 1 umfasst dabei ein Wägeband 2, welches Vorlast für die unterhalb der Zeichenebene angeordnete Wägezelle bildet. Stromaufwärts des Wägebands ist ein Einlaufbereich vorgesehen, der eine Zufuhrvorrichtung 4 umfasst. Auf einem Zufuhrband 5 werden die Briefe 3 hochkant transportiert und in einem Übergabebereich 9, in dem der Brief mit der Zufuhrvorrichtung 4 und dem Wägeband 5 Kontakt hat, an das Wägeband übergeben.

Zu beiden Seiten der Briefe 3 sind oberhalb des Wägebands 2 zwei Wiege-Führungselemente 7a, 7b vorgesehen, die für den Brief 3 eine seitliche Anlage bilden, ohne ihn zu klemmen. Der Abstand zwischen den beiden Wiege-Führungselementen 7a, 7b ist größer gewählt als die maximale Dicke bzw. Y-Ausdehnung eines Briefes 3.

Auch bei der Zufuhrvorrichtung 4 im Einlaufbereich stromaufwärts des Wägebandes sind seitliche Einlauf-Führungselemente 8a, 8b vorgesehen, die den gleichen Abstand zueinander aufweisen, wie die Wiege-Führungselemente 7a, 7b. Ferner sind die Führungselemente 7a, 8a bzw. 7b, 8b sowie Wägeband 2 und Zufuhrband 5 in Transportrichtung X jeweils fluchtend hintereinander angeordnet. Alle Führungselemente 7a, 7b, 8a, 8b sind als Riemen ausgebildet, wobei die jeweils dem Brief 3 zugewandten Abschnitte der Riemen in Transportrichtung X mit gleicher Geschwindigkeit X angetrieben werden wie das Wägeband 2 und auch das Zufuhrband 5.

Ein dem Einlaufbereich zugeführter Brief 3 wird zwischen den Einlauf-Führungselementen 8a, 8b hochkant und auf dem Zufuhrband 5 aufstehend (in der Zeichnung entsprechend dem dargestellten Pfeil von links nach rechts) transportiert. In einem Übergabebereich 9 gelangt der Brief 3 dabei in Kontakt mit dem Wägeband 2 sowie den Wiege-Führungselementen 7a oder 7b, die gemeinsam mit dem Wägeband Vorlast für die Wägezelle bilden. Durch die übereinstimmend gewählten Abstände zwischen den Einlauf-Führungselementen 8a, 8b bzw. den Wiege-Führungselementen 7a, 7b übernimmt das Wägeband den Brief 3 ohne Stoßeffekte in seitlicher, vertikaler oder Transportrichtung, so dass der Brief ohne zusätzlich auf ihn einwirkende Kräfte und/oder Veränderung seiner Ausrichtung im Raum an das Wägeband übergeben wird. Während der Brief 3 über das Wägeband transportiert wird, kann sein Gewicht von der Wägezelle erfasst und weiterverarbeitet werden. Ein stromabwärts des Wägebands vorgesehener Abfuhrbereich kann ebenfalls mit Transportband oder seitlichen Führungselementen ausgebildet sein, um auch die Übergabe des Briefes vom Wägeband in den Abfuhrbereich besonders störungsfrei zu gestalten.

## Patentansprüche

1. Transportvorrichtung (1) für eine Waage, insbesondere ein dynamische Waage, die vorzugsweise nach dem Prinzip der elektromagnetischen Kraftkompensation arbeitet,
a) mit einem Wägeband (2), welches Vorlast für eine Wägezelle bildet,
b) wobei das Wägeband (2) zum Transport von darauf aufliegenden und zu wiegenden Gütern (3) entlang einer ersten Richtung (X) bei gleichzeitiger Erfassung ihres Gewichts ausgebildet ist, und
c) wobei das Wägeband (2) die Güter (3) von einer in einem vorausgehenden Einlaufbereich angeordneten Zufuhrvorrichtung (4), die ein Zufuhrband (5) oder Zufuhrrollen zur Auflage der Güter (3) umfasst und keine Vorlast für die Wägezelle bildet, übernimmt, und
d) wobei sich die zu wiegenden Güter (3) in der ersten Richtung (X), einer dazu senkrechten, horizontalen Richtung (Y) und einer zu beiden Richtung (X, Y) senkrecht verlaufenden, vertikalen Richtung (Z) erstrecken,
**dadurch gekennzeichnet,**
e) **dass** zwei Vorlast bildende, sich entlang der X-Richtung erstreckende, einander gegenüber liegende Wiege-Führungselemente als Riemenelemente (7a, 7b) zum seitlichen Anlehnen der Güter (3) in Y-Richtung vorgesehen sind, um die Güter während des Transports auf dem Wägeband (2) in der angelehnten Lage zu wiegen, wobei der minimale Y-Abstand zwischen den Wiege-Führungselementen (7a, 7b) größer ist als die maximale Ausdehnung der Güter (3) in Y-Richtung.

2. Transportvorrichtung nach Anspruch 1, **dadurch gekennzeichnet, dass** die Zufuhrvorrichtung (4) wenigstens zwei Einlauf-Führungselemente (8a, 8b) aufweist, um die Güter (3) in der zweiten Richtung (Y) gegen Umfallen seitlich zu führen, wobei der Y-Abstand zwischen den Einlauf-Führungselementen (8a, 8b) wenigstens in einem Übergabebereich (9) von der Zufuhrvorrichtung (4) an das Wägeband (2) bestmöglich übereinstimmt mit dem Y-Abstand der Wiege-Führungselemente (7a, 7b) in diesem Bereich.

3. Transportvorrichtung nach dem vorhergehenden Anspruch, **dadurch gekennzeichnet, dass** die Wiege-Führungselemente (7a, 7b) und die Einlauf-Führungselemente (8a, 8b) zur Vermeidung von Übergabestößen in X-Richtung aneinandergrenzen oder sich in X-Richtung teilweise überlappen.

4. Transportvorrichtung nach einem der vorigen Ansprüche, **dadurch gekennzeichnet, dass** die Riemenelemente (7a, 7b) mit gleicher Geschwindigkeit wie das Wägeband (2) antreibbar sind.

5. Transportvorrichtung nach einem der Ansprüche 2 bis 4, **dadurch gekennzeichnet, dass** wenigstens eines der Einlauf-Führungselemente (8a, 8b) als Riemenelement ausgebildet und mit gleicher Geschwindigkeit antreibbar ist wie das wenigstens eine Wiege-Führungselement (7a, 7b).

6. Transportvorrichtung nach einem der vorigen Ansprüche, **dadurch gekennzeichnet, dass** sie zum Transport von stehenden Gütern (3), insbesondere hochkant auf einer Längskante stehenden Briefen, ausgebildet ist, deren Abmessungen in Y-Richtung gering sind gegenüber denjenigen in X- und Z-Richtung.

7. Transportvorrichtung nach einem der vorigen Ansprüche, **dadurch gekennzeichnet, dass** das Wägeband (2) und die angetriebenen Wiege-Führungselemente (7a, 7b) durch einen gemeinsamen Motor, vorzugsweise mittels Zahnriemen, antreibbar sind.

8. Transportvorrichtung nach einem der vorigen Ansprüche, **dadurch gekennzeichnet, dass** alle zu Führungs- oder Transportzwecken angetriebenen Komponenten (2, 5, 7a, 7b, 8a, 8b) mit der gleichen Drehzahl angetrieben werden.

9. Transportvorrichtung nach einem der Ansprüche 2 bis 8, **dadurch gekennzeichnet, dass** die Achsen aller zu Führungszwecken angetriebenen Komponenten (7a, 7b, 8a, 8b) und/oder aller zu Führungs- oder Transportzwecken vorgesehenen Motoren zur Verringerung mechanischer Störungen in Messrichtung (Z) der Wägezelle angeordnet sind.

10. Transportvorrichtung nach einem der Ansprüche 2 bis 9, **dadurch gekennzeichnet, dass** die Motoren aller zu Führungs- und Transportzwecken angetriebenen Komponenten (2, 5, 7a, 7b, 8a, 8b) zur Reduktion von Störfrequenzen hinsichtlich Drehzahl, Drehwinkel oder Beschleunigung synchronisiert sind.

11. Waage mit einer Transportvorrichtung nach einem der vorigen Ansprüche.

## Claims

1. A transport device (1) for a scale, in particular a dynamic scale, which preferably operates according to the principle of electromagnetic force compensation,
a) having a weighing belt (2) which constitutes a preload for a weighing cell,
b) wherein the weighing belt (2) is formed to transport goods (3), which are lying on it and are to be weighed, in a first direction (X) with simultaneous detection of their weight, and
c) wherein the weighing belt (2) takes over the goods (3) from a feed device (4) that is arranged in an upstream inlet region, comprises a feed belt (5) or feed rollers for supporting the goods (3) and does not constitute any preload for the weighing cell, and
d) wherein the goods (3) that are to be weighed extend in the first direction (X), a horizontal direction (Y) perpendicular thereto and a vertical direction (Z) running perpendicularly to both directions (X, Y),
**characterised in that**
e) two weighing-guide elements constituting a preload, extending in the X-direction and lying opposite each other are provided as belt elements (7a, 7b) to cause the goods (3) to lean laterally in the Y-direction in order to weigh the goods in the leaning position during the transportation on the weighing belt (2), with the minimum Y-distance between the weighing-guide elements (7a, 7b) being greater than the maximum extent of the goods (3) in the Y-direction.

2. A transport device according to claim 1, **characterised in that** the feed device (4) has at least two inlet guide elements (8a, 8b) in order to guide the goods (3) laterally in the second direction (Y) to prevent them from falling over, wherein the Y-distance between the inlet guide elements (8a, 8b) at least in a region of transfer (9) from the feed device (4) to the weighing belt (2) coincides in an optimum way with the Y-distance of the weighing-guide elements (7a, 7b) in this region.

3. A transport device according to the preceding claim, **characterised in that** the weighing-guide elements (7a, 7b) and the inlet guide elements (8a, 8b) adjoin each other or overlap in part in the X-direction in order to avoid transfer shocks in the X-direction.

4. A transport device according to one of the previous claims, **characterised in that** the belt elements (7a, 7b) can be driven at the same speed as the weighing belt (2).

5. A transport device according to one of claims 2 to 4, **characterised in that** at least one of the inlet guide elements (8a, 8b) is formed as a belt element and can be driven at the same speed as the at least one weighing-guide element (7a, 7b).

6. A transport device according to one of the previous claims, **characterised in that** it is formed to transport upright goods (3), in particular letters standing on edge on a longitudinal edge, the dimensions of which goods are small in the Y-direction in comparison with those in the X-and Z-direction.

7. A transport device according to one of the previous claims, **characterised in that** the weighing belt (2) and the driven weighing-guide elements (7a, 7b) can be driven by a common motor, preferably by means of toothed belts.

8. A transport device according to one of the previous claims, **characterised in that** all the components (2, 5, 7a, 7b, 8a, 8b) that are driven for guiding or transportation purposes are driven at the same rotational speed.

9. A transport device according to one of claims 2 to 8, **characterised in that** the axles of all the components (7a, 7b, 8a, 8b) that are driven for guiding purposes and/or of all the motors that are provided for guiding or transportation purposes are arranged in the measurement direction (Z) of the weighing cell in order to reduce mechanical interference.

10. A transport device according to one of claims 2 to 9, **characterised in that** the motors of all the components (2, 5, 7a, 7b, 8a, 8b) that are driven for guiding and transportation purposes are synchronized with respect to rotational speed, angle of rotation or acceleration in order to reduce interference frequencies.

11. A scale having a transport device according to one of the previous claims.

## Revendications

1. Dispositif de transport (1) pour une balance, en particulier pour une balance dynamique, qui fonctionne de préférence selon le principe de la compensation de force électromagnétique,
a) comprenant une bande de pesée (2), qui forme une précontrainte pour une cellule de pesée,
b) la bande de pesée (2) étant réalisée aux fins du transport d'articles (3) reposant sur cette dernière et devant être pesés le long d'une première direction (X) tout en détectant simultanément leur poids, et
c) la bande de pesée (2) prenant en charge les articles (3) en provenance d'un dispositif d'amenée (4) disposé dans une zone d'entrée située en amont, lequel dispositif d'amenée comprend une bande d'amenée (5) ou des galets d'amenée destinés à supporter les articles (3) et ne forme aucune précontrainte pour la cellule de pesée, et
d) les articles (3) devant être pesés s'étendant dans la première direction (X), dans une direction horizontale (Y) perpendiculaire à cette dernière et dans une direction verticale (Z) s'étendant de manière perpendiculaire par rapport aux deux directions (X, Y),
**caractérisé en ce que**
e) deux éléments de guidage de pesage se faisant face l'un l'autre, s'étendant le long de la direction X et formant une précontrainte sont prévus dans la direction Y en tant qu'éléments de courroie (7a, 7b) servant à appuyer sur le côté les articles (3) afin de peser les articles lors du transport sur la bande de pesée (2) dans la position appuyée, sachant que la distance Y minimale entre les éléments de guidage de pesage (7a, 7b) est plus grande que l'extension maximale des articles (3) dans la direction Y.

2. Dispositif de transport selon la revendication 1, **caractérisé en ce que** le dispositif d'amenée (4) présente au moins deux éléments de guidage d'entrée (8a, 8b) afin de guider sur le côté les articles (3) dans la deuxième direction (Y) pour éviter toute chute, sachant que la distance Y entre les éléments de guidage d'entrée (8a, 8b) coïncide, au moins dans une zone de transfert (9) allant du dispositif d'amenée (4) à la bande de pesée (2), au mieux avec la distance Y entre les éléments de guidage de pesage (7a, 7b) dans ladite zone.

3. Dispositif de transport selon la revendication précédente, **caractérisé en ce que** les éléments de guidage de pesage (7a, 7b) et les éléments de guidage d'entrée (8a, 8b) se jouxtent pour éviter les collisions lors du transfert dans la direction X ou se chevauchent en partie dans la direction X.

4. Dispositif de transport selon l'une quelconque des revendications précédentes, **caractérisé en ce que** les éléments de courroie (7a, 7b) peuvent être entraînés à la même vitesse que la bande de pesée (2).

5. Dispositif de transport selon l'une quelconque des revendications 2 à 4, **caractérisé en ce qu'**au moins un des éléments de guidage d'entrée (8a, 8b) est réalisé sous la forme d'un élément de courroie et peut être entraîné à la même vitesse que le au moins un élément de guidage de pesage (7a, 7b).

6. Dispositif de transport selon l'une quelconque des revendications précédentes, **caractérisé en ce que** ledit dispositif de transport est réalisé aux fins du transport d'articles (3) se tenant à la verticale, en particulier de lettres se tenant sur une arête longitudinale, dont les dimensions dans la direction Y sont inférieures à celles des directions X et Z.

7. Dispositif de transport selon l'une quelconque des revendications précédentes, **caractérisé en ce que** la bande de pesée (2) et les éléments de guidage de pesage (7a, 7b) entraînés peuvent être entraînés par un moteur commun, en particulier au moyen de courroies dentées.

8. Dispositif de transport selon l'une quelconque des revendications précédentes, **caractérisé en ce que** tous les composants (2, 5, 7a, 7b, 8a, 8b) entraînés à des fins de guidage ou de transport sont entraînés à la même vitesse de rotation.

9. Dispositif de transport selon l'une quelconque des revendications 2 à 8, **caractérisé en ce que** les axes de tous les composants (7a, 7b, 8a, 8b) entraînés aux fins du guidage et/ou tous les moteurs prévus aux fins du guidage ou du transport sont disposés aux fins de la réduction de dysfonctionnements mécaniques dans la direction de mesure (Z) de la cellule de pesée.

10. Dispositif de transport selon l'une quelconque des revendications 2 à 9, **caractérisé en ce que** tous les moteurs de tous les composants (2, 5, 7a, 7b, 8a, 8b) entraînés aux fins du guidage et du transport sont synchronisés aux fins de la réduction des fréquences de dysfonctionnement en termes de vitesse de rotation, d'angle de rotation ou d'accélération.

11. Balance dotée d'un dispositif de transport selon l'une quelconque des revendications précédentes.
